# EUROPÄISCHE PATENTSCHRIFT

(11) **EP 0 429 888 B1**
(45) Veröffentlichungstag und Bekanntmachung des Hinweises auf die Patenterteilung: **01.02.1995**
(21) Anmeldenummer: 90121127.6
(22) Anmeldetag: 05.11.1990
(51) Int. Cl.: H04J 3/16

(54) **Verfahren zur Übertragung eines digitalen Breitbandsignals in einer Untersystemeinheitenkette über ein Netz einer Synchron-Digital-Multiplexhierarchie**
Method for transmitting a digital wide-band signal in a tributary group system over a network of a synchronous digital multiplex hierarchy
Méthode de transmission par un réseau multiplex hierarchisé synchrone et numérique d'un signal à large bande distribué entre des unités de transmission subordonnées

(30) Priorität: 29.11.1989 DE 3939466
(43) Veröffentlichungstag der Anmeldung: 05.06.1991
(73) Patentinhaber: SIEMENS AKTIENGESELLSCHAFT, 80333 München (DE)
(72) Erfinder: Müller, Horst, Dipl.-Ing., W-8021 Hohenschäftlarn (DE)

(56) Entgegenhaltungen:
- IEEE COMMUNICATIONS MAGAZINE, Bd. 29, Nr. 3, März 1989, New York, US;Seiten 8 -15; R. BALLART et al.: "SONET : Now It's the Standard Optical Network"
- IEEE JOURNAL ON SELECTED AREAS IN COMMUNICATION, Bd. SAC-5, Nr. 1, Januar 1987, New York, US; Seiten 19-25; I.TOKIZAWA et al.: "A Synchronous DS4 Multiplexer with Cross-Connect Function"

## Beschreibung

Die Erfindung bezieht sich auf ein Verfahren zur Übertragung eines digitalen Breitbandsignals der Bitrate einer Zwischenhierarchiestufe über ein Multiplexgerät, über eine Strecke in einem von einer Zentrale gesteuerten Netz mit Netzknoteneinrichtungen und über ein Demultiplexgerät einer Synchron-Digital-Multiplexhierarchie.

In der nordamerikanischen Hierarchie werden Bitraten von 1544 kbit/s, 6312 kbit/s und 44736 kbit/s verwendet; die europäische Hierarchie arbeitet u.a. mit Bitraten von 2048 kbit/s; 8448 kbit/s und 34368 kbit/s. Zwischenhierarchiestufen können durch ein Mehrfaches dieser Bitraten gebildet werden.

Die Synchron-Digital-Multiplexhierarchie (SDH) ist in den CCITT- Empfehlungen G.707, G.708 und G.709 definiert. Nach der letztgenannten Empfehlung ist auch die Übertragung von Untersystemeinheitenketten (Tributary Unit Concatenation) vorgesehen. Beim TM3-Treffen (Transmission and Multiplexing) in Brüssel vom 24. bis 28.04.1989 des European Telecommunications Standards Institute ETSI wurde eine Multiplexstruktur und in Aveiro vom 23. bis 28.10.1989 wurden Modifikationen der Bildung von Untersystemeinheitenketten in Temporary Documents No. 42, 62 und 110 vorgeschlagen.

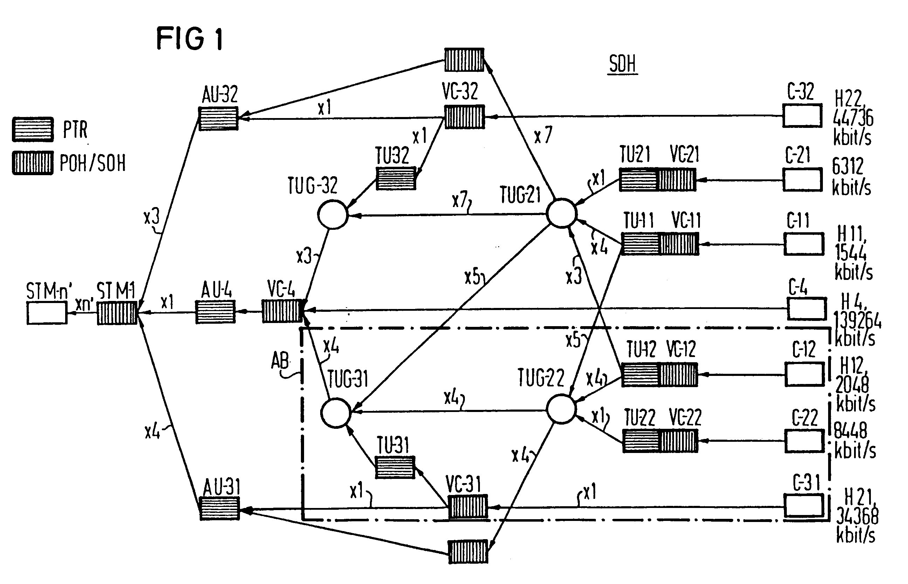

Figur 1 zeigt die beim TM3-Treffen bekanntgewordene Multiplexstruktur. Es bedeutet A Abschnitt, AU Verwaltungseinheit (Administration Unit), C Container, H Digitalsignal, POH Pfadrahmenkopf (Path Overhead), PTR Zeiger (Pointer), SOH Abschnittskopf (Section Overhead), STM Synchrones Transport-Modul (Synchronous Transport Module), TU Untersystemeinheit (Tributary Unit), TUG Untersystemeinheitengruppe (Tributary Unit Group) und VC Virtualcontainer (Virtual Container).

Anstelle der Zahlen nach C, TU, TUG und VC wird nachfolgend im allgemeinen Fall ein n gesetzt. Bei den Leitungen ist angegeben, wieviele parallel vorgesehen sind.

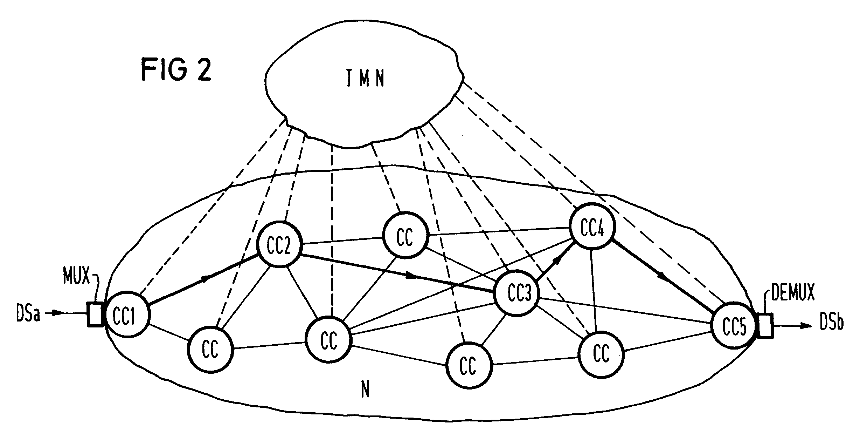

Fig. 2 zeigt ein Netz N für die Synchron-Digital-Multiplexhierarchie SDH mit Netzknoteneinrichtungen (Cross-Connect) CC und einer Zentrale (Telecommunication Management Network) TMN, die diese steuert. Durch eine dicke Linie ist eine zwischen einem Multiplexgerät MUX und einem Demultiplexgerät DEMUX liegende mit Netzknoteneinrichtungen CC1 bis CC5 versehene Strecke hervorgehoben. Dabei ist nur eine Übertragungsrichtung dargestellt.

Die zu übertragenden Breitbandsignale DS werden im Multiplexgerät M mittels positivem Stopfen in Container C-n eingefügt. Jeder von diesen wird durch Hinzufügen eines Pfadrahmenkopfes VC-n POH zu einem Virtualcontainer VC-n ergänzt, die periodisch in einem synchronen Transport-Modul STM-1 übertragen werden. Das erste Byte eines Virtualcontainers VC-n wird durch einen Zeiger AU-n PTR oder TU-n PTR angegeben, dessen Wert die Anfangslage des Virtualcontainers im Übertragungsrahmen festlegt. Als solcher dient in der Regel der Virtualcontainer VC-n einer höheren Hierarchiestufe. Ein solcher bildet mit dem ihm zugeordneten Zeiger AU-n PTR oder TU-n PTR eine Untersystemeinheit AU-n oder TU-n. Mehrere dieser gleichen Aufbaus können wieder zu einer Untersystemeinheitengruppe TUG-n zusammengefaßt werden. Es gibt Untersystemeinheitengruppen TUG-21 und TUG-32 für die nordamerikanische 1,5-Mbit/s-Hierarchie und TUG-22 und TUG-31 für die 2-Mbit/s-Hierarchie, die u.a. in Europa üblich ist.

Nach der bereits genannten CCITT-Empfehlung G. 709, Abschnitt 3.3.7 können Untersystemeinheiten TU-21 einer Bitrate von 6312 kbit/s oder TU-22 einer Bitrate von 8448 kbit/s verkettet werden. In den ebenfalls zitierten Temporary Documents wird weiter eine Kettenbildung aus Untersystemeinheiten TU-11 einer Bitrate von 1544 kbit/s oder TU-12 einer Bitrate von 2048 kbit/s vorgeschlagen. So können beispielsweise ein 11200-kbit/s-Signal als Untersystemeinheitenkette TU-12-5c (5 x VC-12 = 5 x 2240 kbit/s, maximale Bitrate) für eine LAN (Local Area Network)-Ankopplung oder andere Breitbandsignale für zukünftige Dienste übertragen werden. c verweist auf die Verkettung.

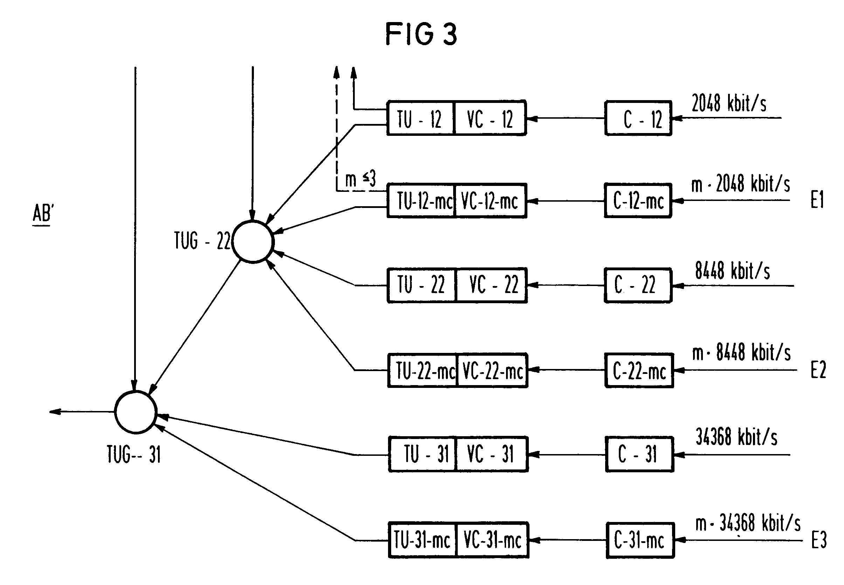

Figur 3 zeigt einen gegenüber dem mit einer gestrichelten Linie umrandeten Abschnitt AB der Multiplexstruktur in Figur 1 erweiterten Abschnitt AB′ . Dieser kann prinzipiell zusätzlich Container C-12-mc, C-22-mc und C-31-mc, Virtualcontainer VC-12-mc, VC-22-mc und VC-31-mc und Untersystemeinheiten TU-12-mc, TU-22-mc und TU-31-mc enthalten.

Über den Eingang E1 kann beispielsweise ein Breitbandsignal einer Bitrate von 11200 kbit/s eingespeist werden, wenn m = 5 gewählt ist. Über einen Container C-12-5c und einen Virtualcontainer VC-12-5c wird eine Untersystemeinheitenkette TU-12-5c gebildet. Über den Eingang E2 kann weiter ein Breitbandsignal von m x 8448 kbit/s und über den Eingang E3 ein Breitbandsignal von m x 34 368 kbit/s eingespeist werden. Weitere Eingänge sind denkbar. Für m kann jeweils eine andere Zahl gesetzt werden.

Eine solche Anordnung kann entsprechend in die obere Hälfte der Multiplexstruktur nach Figur 1 eingefügt werden.

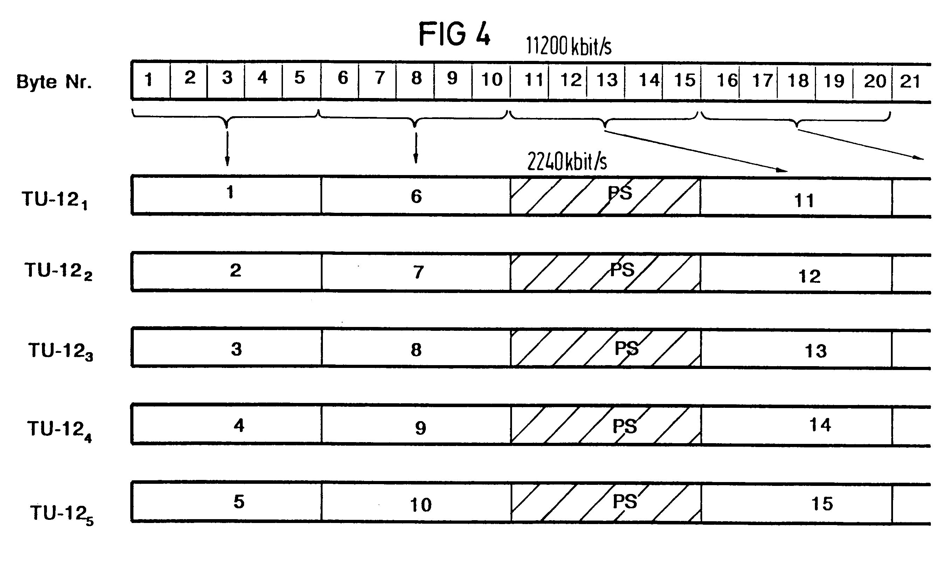

Bei Untersystemeinheitenketten wird der ersten Untersystemeinheit ein Zeiger zugeordnet, der bei Aufnahme der Untersystemeinheitenkette in einen Virtualcontainer deren dortigen Anfang angibt. Alle weiteren Untersystemeinheiten erhalten anstelle eines Zeigers einen Kettenanzeiger (Concatenation Indication CI). Dieser gibt an, daß die Untersystemeinheitenkette zusammengehalten werden muß und daß die Zeigeroperationen der vorhergehenden Untersystemeinheit für die nachfolgende Untersystemeinheit in gleicher Weise durchzuführen sind. Beim genannten 11200-kbits/s-Signal müssen, wie Fig. 4 zeigt, bei einem Zeigersprung PS zur Taktanpassung der ersten Untersystemeinheit TU-12₁ bei den anderen Untersystemeinheiten TU-12₂ bis TU-12₅ gleiche Zeigersprünge PS vorgenommen werden. Dadurch wird erreicht, daß die Reihenfolge der Bytes nicht gestört wird.

Ein Zeigersprung kann beispielsweise in einer Netzknoteneinrichtung CC auftreten, wenn die in einem Transport-Modul STM-1 enthaltene Untersystemeinheitenkette TU-12-5c in ein anderes Transport-Modul STM-1 umgefüllt wird.

Bei diesem Verfahren muß jede Netzknoteneinrichtung Mittel (Hard- und Software) zur Verarbeitung dieser Kettenanzeiger und zum gemeinsamen Zeigersprung der Untersystemeinheitenkette aufweisen. Dies erfordert eine spezielle Steuerung. Zwingend ist weiter, daß die Untersystemeinheiten einer Untersystemeinheitenkette stets aufeinanderfolgend übertragen werden.

Es wurde auch vorgeschlagen, unmittelbar aufeinanderfolgende Untersystemeinheiten in einem Virtualcontainer VG-4 zu verketten. Dies hat aber den Nachteil, daß ein Mischen von einer Untersystemeinheitenkette mit m = 4 mit Untersystemeinheiten TU-31 im selben Transport-Modul STM-1 nicht möglich ist. Bereits vier verkettete Untersystemeinheiten TU-12 belegen jeweils eine Spalte im Rahmen der vier Untersystemeinheitengruppen TUG-31. Da ein geschlossenes 34-Mbit/s-Signal den Platz einer Untersystemeinheitengruppe TUG-31 benötigt, kann es nicht in demselben Transport-Modul STM-1 übertragen werden.

Aufgabe der Erfindung ist es, ein Verfahren zur Übertragung von Untersystemeinheitenketten anzugeben, die sowohl Untersystemeinheiten als auch Untersystemeinheitengruppen als auch beide gemeinsam enthalten können und bei denen der Aufwand zu ihrer Übertragung in der Zentrale und im Netz gering ist.

Diese Aufgabe wird erfindungsgemäß mit den Merkmalen des Patentanspruchs gelöst.

Die Erfindung beruht auf der Erkenntnis, daß die Untersystemeinheiten unabhängig voneinander über die gewählte Strecke übertragen werden können und daß die Netzknoteneinrichtungen dabei von der Kettenbildung keine Kenntnis haben müssen.

Anhand von Ausführungsbeispielen wird die Erfindung nachstehend näher erläutert.
- Fig. 1: zeigt eine SDH-Multiplexstruktur,
- Fig. 2: zeigt ein SDH-Übertragungsnetz,
- Fig. 3: zeigt eine SDH-Multiplexstruktur auch für Untersystemeinheitenketten,
- Fig. 4: zeigt einen Zeigersprung bekannter Art von fünf Untersystemeinheiten TU-12 in einem 11200-kbit/s-Signal,
- Fig. 5a-5e: zeigen das gesamte Verfahren und
- Fig. 6: zeigt das Einfügen eines 11200-kbit/s-Signals als Untersystemeinheitenkette TU-12-5c in einen Virtualcontainer VC-4.

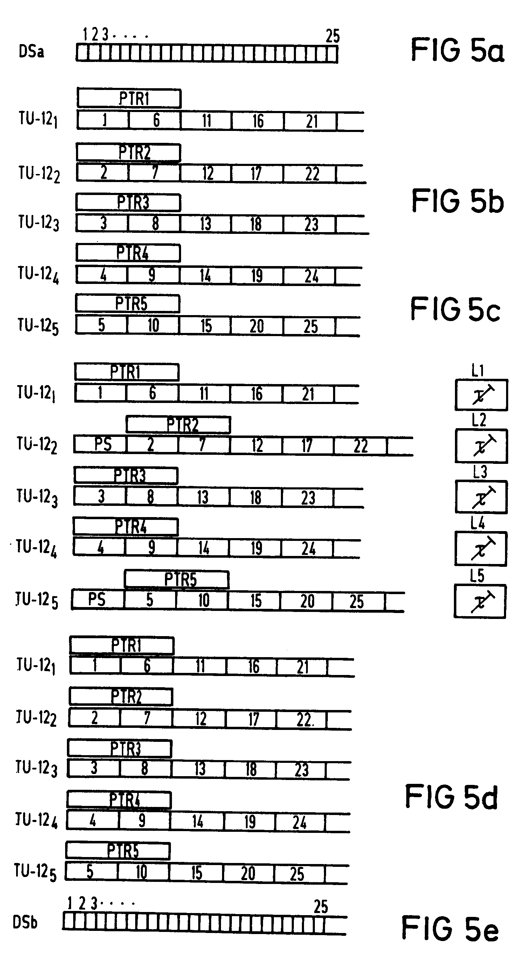

Die Figuren 5a bis 5e zeigen Schritte des erfindungsgemäßen Verfahrens. Zuerst ist in Figur 5a ein zu übertragendes Breitbandsignal (DSa) mit seinen ersten fünfundzwanzig Bytes dargestellt. Figur 5b zeigt dann ein aus fünf Untersystemeinheiten TU-12₁ bis TU-12₅ bestehendes sendeseitiges 11200-kbit/s-Signal mit fünf zugeordneten Zeigern PTR1 bis PTR5, denen allen der Zeigerwert des Zeigers PTR1 der ersten Untersystemeinheit TU-12₁ zugeordnet ist. In jeder Netzknoteneinrichtung CC1 bis CC5 wird geprüft, ob für eine oder mehrere Untersystemeinheiten TU-12₁ bis TU-12₅ eine Taktanpassung erforderlich ist. Ist dies der Fall, wird individuell ein Phasensprung PS durchgeführt. Nach Durchqueren der letzten Netzknoteneinrichtung CC5 haben sich beispielsweise die in Figur 5c gezeigten Verhältnisse ergeben. Empfangsseitig werden die Laufzeitglieder L2 und L5 eingeschaltet, die eine Verzögerung um ein Byte ergeben. Dadurch wird gemäß Figur 5d der Zustand nach Figur 5b wiederhergestellt. Figur 5e zeigt nach einer Bündelung der Untersystemeinheiten TU-12₁ bis TU-12₅ das zu empfangende Breitbandsignal DSb.

Das erfindungsgemäße Verfahren ermöglicht ein Zusammenfassen unterschiedlicher Untersystemeinheiten, beispielsweise TU-12 mit TU-22 bzw. TU-11 mit TU-21. Es muß lediglich sichergestellt sein, daß im Multiplexgerät MUX und im Demultiplexgerät DEMUX das gleiche Verkettungsschema angewendet wird. Ein Zusammenfassen unterschiedlicher Untersystemeinheiten hat den Vorteil, daß der Jitter beim Rückgewinnen des geschlossenen Signals geringer ist. Beim Zusammenfassen von fünf Untersystemeinheiten TU-12 zu einem 11200-kbit/s-Signal können beispielsweise fünf Byte-Sprünge im rückgewonnenen Signal auftreten, während beim Zusammenfassen einer Untersystemeinheit TU-12 und einer Untersystemeinheit TU-22 zu einem 11200-kbit/s-Signal nur zwei Byte-Sprünge möglich sind.

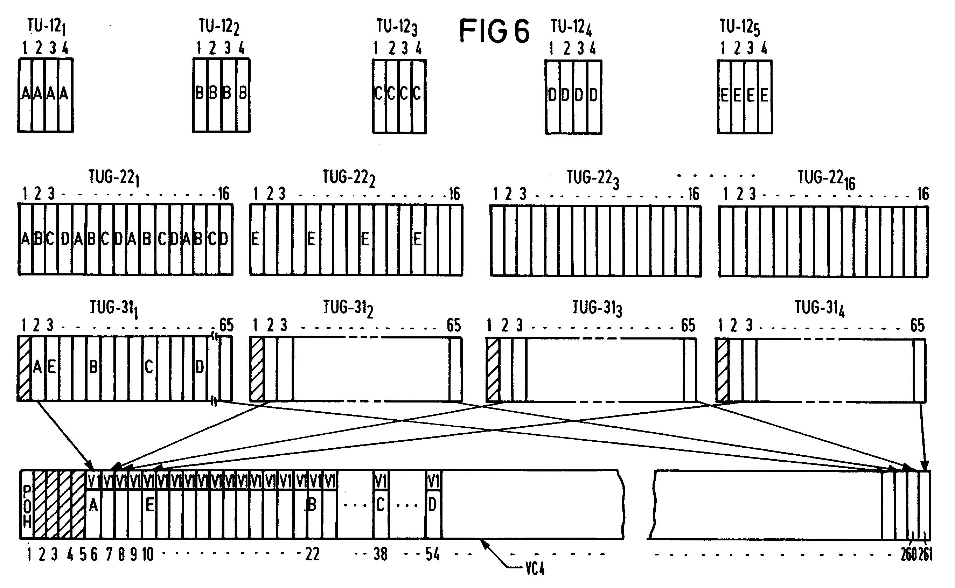

Figur 6 zeigt ein besonders vorteilhaftes Verknüpfungsschema, das ein einfaches Mischen eines geschlossenen 11200-kbit/s-Signals in Untersystemeinheiten TU-12₁ bis TU-12₅ mit Untersystemeinheitsgruppen TUG-22₁ bis TUG-22₁₆ bzw. TUG-31₁ bis TUG-31₄ ermöglicht. Die Untersystemeinheiten TU-12₁ bis TU-12₅ füllen zunächst die Untersystemeinheitengruppe TUG 22₁ vollständig auf. Damit sind die Spalten a bis d untergebracht. Die Spalten e der Untersystemeinheit TU-12₅ werden in die Untersystemeinheitengruppe TUG-22₂ eingefügt. Da die Untersystemeinheitsgruppen TUG-22₁ bis TUG-22₄ ausschließlich in der Untersystemeinheitsgruppe TUG-31₁ untergebracht werden, stehen die Untersystemeinheitsgruppen TUG-31₂ bis TUG-31₄ für die Übertragung von beispielsweise drei 34368-kbit/s-Signalen zur Verfügung. Im Virtualcontainer VC-4 belegen die Untersystemeinheiten TU-12₁ bis TU-12₅ die Spalten 6, 22, 38, 54, 70, 86 usw. sowie die Spalten 10, 74 usw. Mit V1 sind Zeiger für in Überrahmen zusammengefaßte Untersystemeinheiten bezeichnet.

## Patentansprüche

1. Verfahren zur Übertragung eines digitalen Breitbandsignals (DSa) der Bitrate einer Zwischenhierarchiestufe über ein Multiplexgerät (MUX), über eine Strecke in einem von einer Zentrale (TMN) gesteuerten Netz (N) mit Netzknoteneinrichtungen (CC1-CC5) und
über ein Demultiplexgerät (DEMUX) einer Synchron-Digital-Multiplexhierarchie (SDH)
mit Umsetzung des Breitbandsignals (DSa) in eine Untersystemeinheitenkette aus wenigstens zwei Untersystemeinheiten (TU-11, TU-12, TU-21, TU-22, TU-31, TU-32) oder aus wenigstens zwei Untersystemeinheitengruppen (TUG-21, TUG-22, TUG-31, TUG-32) und
mit Zuordnung eines ersten Zeigers (PTR1) zur ersten Untersystemeinheit (TU-n₁) der Untersystemeinheitenkette,
**dadurch gekennzeichnet**,
daß jeweils ein Zeiger (PTR2-PTR5) eines gleichen Werts wie der des ersten Zeigers (PTR1) allen nachfolgenden Untersystemeinheiten (TU-12₂ bis TU-12₅) zugeordnet wird,
daß die Untersystemeinheiten (TU-12₁ bis TU-12₅) voneinander unabhängig übertragen werden,
daß das zeitliche Eintreffen der Untersystemeinheiten (TU-12₁ bis TU-12₅) über ihre Zeiger (PTR1-PTR5) empfangsseitig erkannt wird und
daß die Untersystemeinheitenkette durch Verzögerung voreilender Untersystemeinheiten (TU-12₁ bis TU-12₅) zeitlich regeneriert wird.

2. Verfahren nach Anspruch 1,
**dadurch gekennzeichnet**,
daß die Untersystemeinheitenkette aus wenigstens einer Untersystemeinheit (TU-11, TU-12, TU-21, TU-22, TU-31, TU-32) und wenigstens einer Untersystemeinheitengruppe (TUG-21, TUG-22, TUG-31, TUG-32) gebildet wird.

## Claims

1. Method for transmitting a digital broadband signal (DSa) having the bit rate of an intermediate hierarchy level via a multiplexing device (MUX), over a link in a network (N) having network node devices (CC1-CC5) and controlled by an exchange (TMN), and
via a demultiplexing device (DEMUX) of a synchronous digital multiplex hierarchy (SDH),
with conversion of the broadband signal (DSa) into a tributary unit concatenation comprising at least two tributary units (TU-11, TU-12, TU-21, TU-22, TU-31, TU-32) or at least two tributary unit groups (TUG-21, TUG-22, TUG-31, TUG-32), and
with assignment of a first pointer (PTR1) to the first tributary unit (TU-n₁) of the tributary unit concatenation, characterized
in that in each case one pointer (PTR2-PTR5) having the same value as the first pointer (PTR1) is assigned to all following tributary units (TU-12₂ to TU-12₅),
in that the tributary units (TU-12₁ to TU-12₅) are transmitted independently of one another,
in that the temporal arrival of the tributary units (TU-12₁ to TU-12₅) is detected at the receiving end by means of their pointers (PTR1-PTR5),
and in that the tributary unit concatenation is temporally regenerated by delaying leading tributary units (TU-12₁ to TU-12₅).

2. Method according to Claim 1, characterized in that the tributary unit concatenation is formed from at least one tributary unit (TU-11, TU-12, TU-21, TU-22, TU-31, TU-32) and at least one tributary unit group (TUG-21, TUG-22, TUG-31, TUG-32).

## Revendications

1. Procédé de transmission d'un signal (DSa) numérique à large bande ayant le débit binaire d'un étage de hiérarchie intermédiaire par l'intermédiaire d'un appareil (MUX) multiplexeur, par l'intermédiaire d'une voie dans un réseau (N) commandé par un central (TMN) et comportant des dispositifs (CC1 à CC5) nodaux de réseau, et
par l'intermédiaire d'un appareil (DEMUX) démultiplexeur d'une hiérarchie (SDH) de multiplexage synchrone numérique,
dans lequel on convertit le signal (DSa) à large bande en une chaîne d'unités tributaires constituée d'au moins deux unités tributaires (TU-11, TU-12, TU-21, TU-22, TU-31, TU-32) ou constituée d'au moins deux groupes (TUG-21, TUG-22, TUG-31, TUG-32) d'unités tributaires, et
dans lequel on associe un premier pointeur (PTR1) à la première unité (TU-n₁) tributaire de la chaîne d'unités tributaires,
caractérisé en ce que
on associe à toutes les unités (TU-12₂ à TU-12₅) tributaires suivantes respectivement des pointeurs (PTR2 à PTR5) ayant une valeur égale à celle du premier pointeur (PTR1),
on transmet les unités tributaires (TU-12₁ à TU-12₅) indépendamment les unes des autres,
on identifie, côté réception, l'apparition dans le temps des unités tributaires (TU-12₁ à TU-12₅) par leurs pointeurs (PTR1 à PTR5) et
on régénère dans le temps la chaîne d'unités tributaires en retardant des unités tributaires en avance (TU-12₁ à TU-12₅).

2. Procédé suivant la revendication 1, caractérisé en ce que on forme la chaîne d'unités tributaires, d'au moins une unité tributaire (TU-11, TU-12, TU-21, TU-22, TU-31, TU-32) et d'au moins un groupe (TUG-21, TUG-22, TUG-31, TUG-32) d'unités tributaires.
